# EUROPÄISCHE PATENTSCHRIFT

(11) **EP 0 810 051 B1**
(45) Veröffentlichungstag und Bekanntmachung des Hinweises auf die Patenterteilung: **18.08.1999**
(21) Anmeldenummer: 97108660.8
(22) Anmeldetag: 30.05.1997
(51) Int. Cl.: B23K 1/19, B23K 35/02, B23K 35/00

(54) **Verbundelement und Verfahren zu dessen Herstellung**
Sandwich element and method of manufacturing
Elément de liaison ainsi que sa fabrication

(30) Priorität: 31.05.1996 DE 19621952
(43) Veröffentlichungstag der Anmeldung: 03.12.1997
(73) Patentinhaber: Märzheuser, Peter, 57520 Steinebach (DE)
(72) Erfinder: Märzheuser, Peter, 57520 Steinebach (DE)
(74) Vertreter: Harwardt, Günther, Dipl.-Ing.

(56) Entgegenhaltungen:
- EP-A- 0 595 254
- US-A- 5 263 640

## Beschreibung

Die Erfindung betrifft ein Verbundelement aus einem Stahlelement und einem Hartmetallelement sowie Verbindungsmittel, die das Stahlelement und das Hartmetallelement unlösbar miteinander verbinden und darüber hinaus ein Verfahren zur Herstellung desselben. Als nächstkommender Stand der Technik ist EP-A-0 595 254 anzusehen. Aus dieser Druckschrift ist ein Verfahren zum Auflöten von Hartmetall auf einen Grundkörper aus Stahl bekannt, bei dem ein Dreischichtlot verwendet wird. Auf einer Mittelschicht aus einer Kupfer- oder Nickellegierung ist beiderseits je eine Schicht aus einem Hartlot angebracht. Die Schmelztemperatur des an die Mittelschicht anplattierten Lotes in Form der beiden Schichten soll wenigstens 50° C unterhalb der Schmelztemperatur der Mittelschicht liegen. Beim Verbinden durch Löten soll hierdurch gewährleistet sein, daß die Legierung der Mittelschicht während des Lötvorganges nicht aufschmilzt. Nach dem Löten erfolgt eine Temperaturbehandlung zur Ausscheidungshärtung der Mittelschicht. Herausgestellt ist, daß die hohe Dehnbarkeit der Zwischenschicht während der gesamten Abkühlphase erhalten bleibt.

Die DD-A-153 862 beschreibt eine Schichtlötfolie zur Verbindung von Hartmetall mit einem Trägerwerkstoff aus Stahl. Sie weist drei Schichten auf, und zwar eine Mittelschicht aus Fe-Ni und daran beidseitig angebrachte Deckschichten aus Elektrolytkupfer.

Hiermit soll über Lötverbindungen mit bekannten Kupferloten eine höhere Scherfestigkeit erzielt werden.

Die DE-A-33 21 438 beschreibt eine Lötfolie, bei der beispielsweise auf einer Kupferfolie ein- oder beidseitig eine Kobaltschicht galvanisch aufgebracht wurde. Beim Löten von Stahl mit Hartmetall ist die Kobaltschicht dem Stahl zugewandt. Durch ein solches Lot soll eine wesentliche Erhöhung der Schlagfestigkeit der miteinander verbundenen Teile erzielt werden.

In der DE-A-34 22 329 ist ebenfalls ein Dreischichtlot mit unterschiedlichen Lotschichten auf den Seiten einer Mittelschicht bekannt.

Für Maschinenteile, die einer hohen abrasiven Beanspruchung unterliegen, haben die Versuche, Beplankungen aus Hartmetall durch Löten aufzubringen, bisher nicht zum Erfolg geführt. Gleiches gilt auch für die Auskleidung von Behältern. Daher ist häufig eine Festlegung der Hartmetallteile an dem Grundmaterial aus Stahl durch mechanische Mittel vorgesehen. Dies gilt insbesondere für großflächigere Elemente, da aufgrund der Oberflächenspannungen und des unterschiedlichen Dehnungsverhaltens Scherkräfte auftreten, die zur Zerstörung der Hartmetallbeplankung führen.

Der Erfindung liegt daher die Aufgabe zugrunde, ein Verbundelement aus einem Stahlelement und einem Hartmetallelement vorzuschlagen, bei dem beide Teile unlösbar miteinander verbunden sind und eine dauerhafte Verbindung gewährleistet wird.

Diese Aufgabe wird erfindungsgemäß dadurch gelöst, daß als Verbindungsmittel eine stoffschlüssig mit dem Hartmetallelement verbundene erste Schicht aus einem ersten Lot mit einem ersten Schmelzpunkt, eine stoffschlüssig mit dem Stahlelement verbundene zweite Schicht aus einem zweiten Lot mit einem zweiten Schmelzpunkt und zwischen den beiden Schichten verteilt angeordnete Verbindungskörper aus Hartmetall in Form von Hartmetallsplitt oder -kugeln vorgesehen sind, die teilweise in die erste Schicht und teilweise in die zweite Schicht eingebettet sind, wobei der Schmelzpunkt des die erste Schicht bildenden ersten Lotes höher ist als der Schmelzpunkt des die zweite Schicht bildenden zweiten Lotes.

Von Vorteil bei dieser Ausbildung ist, daß unter Vermittlung der beiden Lotschichten und der Verbindungskörper aus Hartmetallsplitt oder -kugeln eine innige Verbindung erzielt wird, wobei die unterschiedlichen Spannungen, die aus der unterschiedlichen Wärmeausdehnung des Stahlelementes und des Hartsmetallelementes resultieren, ausgeglichen werden. Darüber hinaus wird über die Verbindungskörper eine derart innige Verbindung erzielt, daß bei der Beanspruchung im Betrieb kein Ablösen oder Zerstören des Hartmetallelementes erfolgt. Durch die jeweils relativ kleine Kontaktfläche der Verbindungskörper mit den Lotschichten werden die vom Hartmetallelement und Stahlelement auf die Verbindungskörper geleiteten Kräfte im Zusammenwirken der Lotschichten mit den Verbindungskörpern aufgenommen und, zumindest teilweise, ausgeglichen. Dabei heben sich die Kräfte zumindest teilweise gegenseitig auf. Die unterschiedlichen Spannungen können ferner in Verformungen im Verbindungsbereich zwischen den Verbindungskörpern und den Lotschichten umgesetzt werden. Bei dem Hartmetall kann es sich um sogenannte Durchdringungsverbundwerkstoffe oder aber auch um Teilchenverbundwerkstoffe handeln. Eine gute und dauerhafte Verbindung wird dadurch gewährleistet, daß die Verbindungskörper einen Wärmeausdehnungskoeffizienten aufweisen, der dem des Hartmetallelementes zumindest annähernd entspricht.

Die Verbindungskörper aus Hartmetallsplitt haben eine unregelmäßige kantige Form. Zur Verbindung ist eine Vielzahl von Verbindungskörpern vorgesehen, deren Größe in Hinsicht auf die Abmessung der zu verbindenden Stahlelemente und Hartmetallelemente und unter Berücksichtigung der auftretenden Beanspruchung vorzugsweise zwischen 0,1 mm bis 0,3 mm beträgt. Ferner wird eine regelmäßige Verteilung derselben auf den zu verbindenen Flächen bevorzugt. Darüber hinaus ist die Streudichte ebenfalls an diejeweils gegebenen Verhältnisse anzupassen.

In Ausgestaltung der Erfindung ist vorgesehen, daß das die erste Schicht bildende Lot durch ein Kupfer- oder Nickellot oder eine Kombination aus beiden dargestellt ist. Die Verbindung mit dem Hartmetallelement und den Verbindungskörpern aus Hartmetallsplitt erfolgt bei einer Wärmeeinwirkung mit einer Temperatur von 1.000° C bis 1.150° C. Das die zweite Schicht bildende zweite Lot wird vorzugsweise durch ein Silberlot dargestellt. Dessen Schmelztemperatur liegt unter der des Kupfer- bzw. Nickellotes. Sie liegt in der Größenordnung zwischen 550° bis 700° C. Es werden für beide Lote vorzugsweise flußmittelfreie Lote verwendet.

Zur Herstellung eines erfindungsgemäßen Verbundelementes ist vorgesehen, daß zunächst auf eine Fläche des flächigen Hartmetallelementes bei Wärmeeinwirkung mittels eines ersten Lotes höherer Schmelztemperatur Verbindungskörper aus Hartmetall in Form von Hartmetallsplitt oder -kugeln in verteilter Form befestigt werden, wobei die durch das erste Lot gebildete erste Schicht eine geringere Dicke aufweist als die Verbindungskörper, das anschließend die über die erste Schicht vorstehenden Abschnitte der Verbindungskörper bei Wärmeeinwirkung mittels eines zweiten Lotes mit einer niedrigeren Schmelztemperatur als der des ersten Lotes mit einer Fläche des Stahlelementes verbunden werden.

In Ausgestaltung des erfindungsgemäßen Verfahrens wird vorgeschlagen, daß das erste Lot in Form eines Pulvers, einer Paste oder in einem Bad auf das Hartmetallelement aufgebracht, danach dieses mit den Verbindungskörpern aus Hartmetall definiert bestreut und anschließend bei Vakuum- oder in Schutzgasatmosphäre einer Wärmeeinwirkung unterworfen wird, bei welcher der Schmelzpunkt des ersten Lotes zeitweise überschritten wird. In weiterer Konkretisierung des Verfahrens ist vorgeschlagen, daß das zweite Lot in Form eines Pulvers, einer Paste oder im Bad auf eine Fläche des Stahlelementes aufgebracht, danach das die erste Schicht aus einem ersten Lot und die Verbindungskörper aufweisende Hartmetallelement auf die das zweite Lot aufweisende Fläche mit den Verbindungskörpern aufgelegt wird und anschließend bei Vakuum- oder Schutzgasatmosphäre einer Wärmeeinwirkung unterworfen wird, bei welcher der Schmelzpunkt des zweiten Lotes zeitweise überschritten wird, wobei jedoch diese Temperatur unterhalb des Schmelzpunktes des ersten Lotes liegt.

Bei beiden Verfahrensschritten ist vorgesehen, daß das Abkühlen nach der Wärmeeinwirkung in einer oxidfreien Atmosphäre erfolgt. In der Zeichnung ist ein Verbundelement im Schnitt dargestellt.

Es zeigt
- Figur 1: einen Schnitt durch das Verbundelement und
- Figur 2: einen Schnitt II-II gemäß Figur 1.

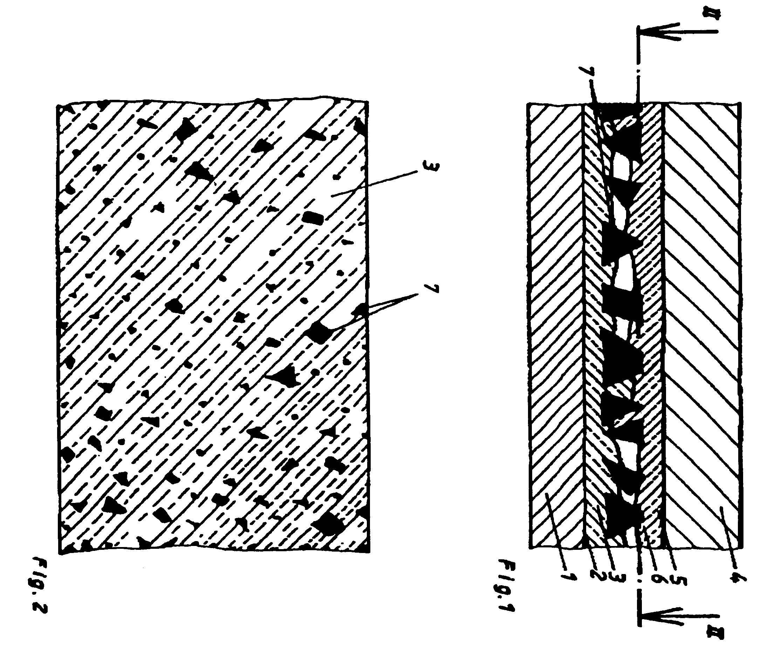

Das aus Figur 1 ersichtliche Verbundelement umfaßt ein plattenförmiges oder flächiges Hartmetallelement 1, dessen dem Stahlelement 4, das ebenfalls plattenförmig bzw. flächig ausgebildet ist, gegenüberliegende Fläche mit 2 bezeichnet ist. Auf der Fläche 2 ist eine erste Schicht 3 aus einem ersten Lot höherer Schmelztemperatur, nämlich einem Kupfer- oder Nickellot angebracht. Das Stahlelement 4 weist auf seiner dem Hartmetallelement 1 zugewandten Fläche 5 eine Lotschicht auf, die eine zweite Schicht 6 bildet und aus einem Lot mit einer Schmelztemperatur, die niedriger ist als die der ersten Schicht, besteht. Als Lot für die zweite Schicht 6 kommt vorzugsweise ein Silberlot in Frage. In beide Schichten 3, 6 greifen zwischen diesen angeordnete Verbindungskörper aus Hartmetallsplitt ein. Sie sind also teilweise in jede der Schichten 3, 6 eingebettet. Es sind kleine, kantige Körper einer definierten Größe, die für die Erzielung der gewünschten Verbindung ausreichend ist. Aus der Figur 2 ist die Verteilung der Verbindungskörper 7 erkennbar. Es können zur Verbindung Verbindungskörper 7 gleicher oder unterschiedlicher Größe gewählt werden. Darüber hinaus kann die Anordnung regel- oder unregelmäßig je nach Anforderung gewählt werden.

Zur Herstellung dieses Verbundelementes ist vorgesehen, daß zunächst auf die Fläche 2 des Hartmetallelementes 1 ein Lot in einer pastösen oder pulvrigen Form oder durch Tauchen aufgebracht wird und danach eine definierte Bestreuung mit Verbindungskörpern 7 aus Hartmetallsplitt erfolgt. Anschließend erfolgt eine Wärmebehandlung im Vakuumofen oder in einem Ofen mit Schutzgasatmosphäre, so daß die Schmelztemperatur des ersten Lotes überschritten wird und sich die Lotschicht 3 ausbildet, in welcher die Verbindungskörper 7 zumindest teilweise eingebettet sind.

Anschließend erfolgt ein Abkühlen in einer oxidfreien Atmosphäre, um ein Oxidieren zu verhindern.

Danach wird das Stahlelement 4 auf seiner Fläche 5 mit einem zur Herstellung der zweiten Schicht 6 erforderlichen Ausgangsmaterial eines zweiten Lotes in pastöser, pulvriger oder im Bad aufgebrachter Form versehen. Dann wird die Einheit, bestehend aus dem Hartmetallelement 1 und den über die erste Schicht 3 mit diesem verbundenen Verbindungskörpern 7 aus Hartmetallsplitt, auf die das Lot in der Ausgangsform aufweisende Fläche 5 des Stahlelementes 4 aufgelegt und zur Wärmebehandlung in einen Vakuumofen oder einen Ofen mit Schutzgasatmosphäre gegeben, wobei die Wärmeeinwirkung bei einer Temperatur erfolgt, die die Schmelztemperatur des zweiten Lotes, das die zweite Schicht 6 bildet, überschreitet, jedoch unterhalb der Schmelztemperatur des die erste Schicht 3 bildenden ersten Lotes liegt. Vorzugsweise handelt es sich bei dem die zweite Schicht 6 bildenden Lot um ein Silberlot. Bei der Erwärmung werden die Verbindungskörper 7 mit ihren über die Oberfläche der ersten Schicht 3 vorstehenden Abschnitten zumindest teilweise in die zweite Schicht 6 eingebettet, so daß eine enge Verbindung entsteht. Anschließend erfolgt widerum ein Abkühlen in einer oxidfreien Atmosphäre. Die Verbindungskörper 7 bewirken eine innige Verbindung zwischen den beiden Schichten 3, 6, so daß sich die im Hartmetallelement 1 und im Stahlelement 4 durch den Verbindungsprozeß selbst entstehenden Spannungen nicht nachteilig auf die Verbindung und den Zustand des Hartmetallelementes auswirken können.

### Bezugszeichenliste

- 1: Hartmetallelement
- 2: Fläche
- 3: erste Schicht
- 4: Stahlelement
- 5: Fläche
- 6: zweite Schicht
- 7: Verbindungskörper

## Patentansprüche

1. Verbundelement, umfassend ein flächiges Stahlelement (4) und ein flächiges Hartmetallelement (1) sowie Verbindungsmittel, die das Stahlelement (4) und das Hartmetallelement (1) unlösbar miteinander verbinden,
dadurch gekennzeichnet, daß
als Verbindungsmittel eine stoffschlüssig mit dem Hartmetallelement (1) verbundene erste Schicht (3) aus einem ersten Lot mit einem ersten Schmelzpunkt, eine stoffschlüssig mit dem Stahlelement (4) verbundene zweite Schicht (6) aus einem zweiten Lot mit einem zweiten Schmelzpunkt und zwischen den beiden Schichten (3, 6) verteilt angeordnete Verbindungskörper (7) aus Hartmetall in Form von Hartmetallsplitt oder -kugeln, die teilweise in die erste Schicht (3) und teilweise in die zweite Schicht (6) eingebettet sind, vorgesehen sind, wobei der Schmelzpunkt des die erste Schicht (3) bildenden ersten Lotes höher ist als der Schmelzpunkt des die zweite Schicht (6) bildenden zweiten Lotes.

2. Verbundelement nach Anspruch 1,
dadurch gekennzeichnet,
daß die Verbindungskörper (7) als kantige Körper dargestellt sind.

3. Verbundelement nach einem der Ansprüche 1 bis 2,
dadurch gekennzeichnet,
daß die Verbindungskörper (7) eine Größe von 0,1 mm bis 3,0 mm ausweisen.

4. Verbundelement nach Anspruch 1,
dadurch gekennzeichnet,
daß die Verbindungskörper (7) regelmäßig verteilt angeordnet sind.

5. Verbundelement nach Anspruch 1,
dadurch gekennzeichnet,
daß das die erste Schicht (3) bildende erste Lot durch ein Kupfer- und/oder Nickellot dargestellt ist.

6. Verbundelement nach Anspruch 1,
dadurch gekennzeichnet,
daß das die zweite Schicht (6) bildende zweite Lot durch ein Silberlot dargestellt ist.

7. Verfahren zur Herstellung eines Verbundelementes nach einem der Ansprüche 1 bis 6,
dadurch gekennzeichnet,
daß zunächst auf eine Fläche des flächigen Hartmetallelementes bei Wärmeeinwirkung mittels eines ersten Lotes höherer Schmelztemperatur Verbindungskörper aus Hartmetallsplitt oder -kugeln in verteilter Form befestigt werden, wobei die durch das erste Lot gebildete erste Schicht eine geringere Dicke aufweist als die Verbindungskörper, das anschließend die über die erste Schicht vorstehenden Abschnitte der Verbindungskörper bei Wärmeeinwirkung mittels eines zweiten Lotes mit einer niedrigeren Schmelztemperatur als der des ersten Lotes mit einer Fläche des Stahlelementes verbunden werden.

8. Verfahren nach Anspruch 7,
dadurch gekennzeichnet,
daß das erste Lot in Form eines Pulvers, einer Paste oder in einem Bad auf das Hartmetallelement aufgebracht, danach dieses mit den Verbindungskörpern definiert bestreut und anschließend bei Vakuum- oder in Schutzgasatmosphäre einer Wärmeeinwirkung unterworfen wird, bei welcher der Schmelzpunkt des ersten Lotes zeitweise überschritten wird.

9. Verfahren nach einem der Ansprüche 7 oder 8,
dadurch gekennzeichnet,
daß das zweite Lot in Form eines Pulvers, einer Paste oder im Bad auf eine Fläche des Stahlelementes aufgebracht, danach das die erste Schicht aus einem ersten Lot und die Verbindungskörper aufweisende Hartmetallelement auf die das zweite Lot aufweisende Fläche mit den Verbindungskörpern aufgelegt wird und anschließend bei Vakuum- oder Schutzgasatmosphäre einer Wärmeeinwirkung unterworfen wird, bei welcher der Schmelzpunkt des zweiten Lotes zeitweise überschritten wird, wobei jedoch diese Temperatur unterhalb des Schmelzpunktes des ersten Lotes liegt.

10. Verfahren nach einem der Ansprüche 7 bis 9,
dadurch gekennzeichnet,
daß das Abkühlen nach der Wärmeeinwirkung in einer oxidfreien Atmosphäre erfolgt.

## Claims

1. Composite element, comprising a steel element (4) having a surface and a hard metal element (1) having a surface, as well as connecting means, which join the steel element (4) and the hard metal element (1) non-detachably to one another,
characterized in that
there are provided as connecting means a first layer (3) of a first solder having a first melting point, which is cohesively joined to the hard metal element (1), a second layer (6) of a second solder having a second melting point, which is cohesively joined to the steel element (4), and connecting bodies (7) made of hard metal in the form of hard metal chips or balls, which are arranged in a distributed manner between the two layers (3, 6) and embedded partially in the first layer (3) and partially in the second layer (6), wherein the melting point of the first solder forming the first layer (3) is higher than the melting point of the second solder forming the second layer (6).

2. Composite element according to claim 1,
characterized in
that the connecting bodies (7) take the form of edged bodies.

3. Composite element according to one of claims 1 to 2,
characterized in
that the connecting bodies (7) have a size of 0.1 mm to 3.0 mm.

4. Composite element according to claim 1,
characterized in
that the connecting bodies (7) are arranged in a regularly distributed manner.

5. Composite element according to claim 1,
characterized in
that the first solder forming the first layer (3) comprises a copper and/or nickel solder.

6. Composite element according to claim 1,
characterized in
that the second solder forming the second layer (6) comprises a silver solder.

7. Method of manufacturing a composite element according to one of claims 1 to 6,
characterized in
that, first, connecting bodies comprising hard metal chips or balls are fastened in a distributed form onto a surface of the hard metal element having a surface under the effects of heat by means of a first solder with a higher melting temperature, wherein the first layer formed by the first solder has a lower thickness than the connecting bodies, and that then the portions of the connecting bodies protruding from the first layer are joined to a surface of the steel element under the effects of heat by means of a second solder having a melting temperature lower than that of the first solder.

8. Method according to claim 7,
characterized in
that the first solder is applied in the form of a powder, a paste or in a bath onto the hard metal element, the latter is then sprinkled in a defined manner with the connecting bodies and subsequently subjected in a vacuum- or protective atmosphere to a heat treatment, during which the melting point of the first solder is temporarily exceeded.

9. Method according to one of claims 7 or 8,
characterized in
that the second solder is applied in the form of a powder, a paste or in the bath onto a surface of the steel element, then the hard metal element comprising the first layer of a first solder and the connecting bodies is applied by the connecting bodies onto the surface having the second solder and subsequently subjected in a vacuum- or protective atmosphere to a heat treatment, during which the melting point of the second solder is temporarily exceeded, wherein however said temperature lies below the melting point of the first solder.

10. Method according to one of claims 7 to 9,
characterized in
that the cooling after the heat treatment is effected in an oxide-free atmosphere.

## Revendications

1. Elément composite comprenant un élément plat en acier (4) et un élément plat en métal dur (1) ainsi que des moyens de liaison, qui relient entre eux de façon inamovible l'élément en acier (4) et l'élément en métal dur (1),
caractérisé en ce que
comme moyens de liaison il est prévu une première couche (3), qui est reliée selon une liaison par matériaux compatibles a l'élément en métal dur (1) et est formée d'une brasure possédant un premier point de fusion, une seconde couche (6), qui est reliée selon une liaison par matériaux compatibles à l'élément en acier (4) et formée d'une seconde brasure possédant un second point de fusion, et des corps de liaison (7) en métal dur, disposés en étant répartis entre les deux couches (3, 4) et agencés sous la forme de fragments ou de billes de métal dur, qui sont enchâssés partiellement dans la première couche (3) et partiellement dans la seconde couche (6), le point de fusion de la première brasure constituant la première couche (3) étant supérieur au point de fusion de la seconde brasure constituant la seconde couche (6).

2. Elément composite selon la revendication 1, caractérisé en ce
que les corps de liaison (7) sont représentés sous la forme de corps anguleux.

3. Elément composite selon l'une des revendications 1 et 2, caractérisé en ce
que les corps de liaison (7) possèdent une taille comprise entre 0,1 mm et 3,0 mm.

4. Elément composite selon la revendication 1, caractérisé en ce
que les corps de liaison (7) sont disposés en étant uniformément répartis.

5. Elément composite selon la revendication 1, caractérisé en ce
que la première brasure formant la première couche (3) est représentée par une brasure à base de cuivre et/ou de nickel.

6. Elément composite selon la revendication 1, caractérisé en ce
que la seconde brasure formant la seconde couche (6) est représentée par une brasure à l'argent.

7. Procédé pour fabriquer un élément composite selon l'une des revendications 1 à 6, caractérisé en ce
que tout d'abord on fixe des corps de liaison formés de fragments ou de billes en métal dur selon une disposition répartie, sur une surface de l'élément plat en métal dur sous l'action d'une chaleur à l'aide d'une première brasure ayant une température de fusion plus élevée, la première couche formée par la première brasure possédant une épaisseur inférieure à celle des corps de liaison, et qu'ensuite on relie les parties, qui font saillie au-dessus de la première couche, des corps de liaison à une surface de l'élément en acier, moyennant l'action de chaleur, à l'aide d'une seconde brasure possédant une température de fusion inférieure à celle de la première brasure.

8. Procédé selon la revendication 7, caractérisé en ce
qu'on dépose la première brasure sous la forme d'une poudre ou d'une pâte ou dans un bain sur l'élément en métal dur, qu'ensuite on répand d'une manière définie les corps de liaison sur la brasure et qu'ensuite on soumet la brasure, dans une atmosphère de vide ou dans une atmosphère de gaz protecteur, à un traitement avec une chaleur, lors duquel le point de fusion de la première brasure est dépassé par instants.

9. Procédé selon l'une des revendications 7 ou 8, caractérisé en ce
qu'on dépose la seconde brasure sous la forme d'une poudre, d'une pâte ou dans un bain sur une surface de l'élément en acier, qu'ensuite on applique l'élément en métal dur comportant la première couche formée d'une première brasure et les corps de liaison, par les corps de liaison sur la surface qui comporte la seconde brasure, et qu'ensuite on le soumet, dans une atmosphère sous vide ou dans une atmosphère de gaz protecteur, à un traitement avec une chaleur, lors duquel le point de fusion de la seconde brasure est dépassé par instants, cette température étant cependant inférieure au point de fusion de la première brasure.

10. Procédé selon l'une des revendications 7 à 9, caractérisé en ce
que le refroidissement s'effectue après le traitement par une chaleur, dans une atmosphère exempte d'oxyde.
